# EUROPÄISCHE PATENTANMELDUNG

(11) **EP 3 290 733 A1**
(43) Veröffentlichungstag der Anmeldung: **07.03.2018**
(21) Anmeldenummer: 16186555.5
(22) Anmeldetag: 31.08.2016
(51) Int. Cl.: F16C 37/00, F16C 17/02, F16C 33/10

(54) **GLEITLAGER MIT SCHMIERNUTEN FÜR HYDRAULISCHE DREHÜBERTRAGUNG**

(71) Anmelder: Flender GmbH, 46395 Bocholt (DE)
(72) Erfinder: Meyer, Thomas, 52223 Stolberg (DE)
(74) Vertreter: Maier, Daniel Oliver

(57) **Zusammenfassung**

Die Erfindung betrifft ein Gleitlager (20), das mindestens eine Lagerschale (11) zur Aufnahme einer Welle (30) eine in Umfangsrichtung (36) verlaufende erste Schmierstoffnut (16) umfasst. Die erste Schmierstoffnut (16) ist hydraulisch mit einer Schmierstoffzufuhr (22) verbunden und mit einer Mehrzahl an zumindest teilweise axial ausgerichteten abgesetzten zweiten Schmierstoffnuten (18) verbunden. Die zweiten Schmierstoffnuten (18) zweigen von der ersten Schmierstoffnut (16) ab. Erfindungsgemäß sind die zweiten Schmierstoffnuten (18) abgesetzt ausgebildet und zur Bereitstellung eines Schmierfilms (26) zu einer Wärmeabfuhr dimensioniert.

## Beschreibung

Die Erfindung betrifft ein Gleitlager für eine hydraulische Drehübertragung, zu zur Förderung eines Schmierstoffes dient. Die Erfindung betrifft auch ein Planetengetriebe, das mit einer hydraulischen Drehübertragung mit einem derartigen Gleitlager ausgestattet ist.

Eine hydraulische Drehübertragung, auch hydraulischer Drehübertrager genannt, dient dazu, Schmierstoff von einem stillstehenden Bauteil auf ein rotierendes Bauteil zu übertragen. Im Drehübertrager bildet ein Stator ein erstes Bauteil und ein Rotor ein zweites Bauteil. Der Rotor dreht sich im Betrieb um den Stator. Zwischen den beiden Bauteilen liegt ein Spiel vor, das einen Schmierspalt ausbildet. Durch einen hydraulischen Widerstand des Stator-Rotor-Systems wird der unter Druck zugeführte Schmierstoff auf das rotierende Bauteil übertragen werden. Infolge des Spiels zwischen dem ersten und zweiten Bauteil liegen ein Schmierstoff- und ein Druckverlust vor.

Aus DE 10 2010 025 067 A1 ist ein Verfahren zum Ausbilden einer Schmierstruktur in einem Pleuelauge bekannt, die eine umlaufende Schmiernut umfasst. Neben der umlaufenden Schmiernut ist das Pleuelauge mit Zweigkanälen verbunden, die mit der Schmiernut verbunden sein können. Die Zweigkanäle werden durch ein Umformen mit einem Groovewerkzeug hergestellt und weisen eine Tiefe von 2 µm bis 5 µm auf.

DE 10 2011 108 369 A1 offenbart ein Schmiersystem für einen Planetenradsatz, der eine Trägeranordnung mit zwei Trägerelementen umfasst. Am Trägerelement ist ein Planetenbolzen angeordnet, in dem eine diagonale Schmierbohrung ausgebildet ist. Die Schmierbohrung mündet an eine Lagerfläche des Planetenbolzens, so dass ein Schmierstoff zwischen den Planetenbolzen und das Planetenrad tritt.

Nachteilig an den bekannten Lösungen ist, dass diese bei einem Verkippen der aufgenommenen Welle zu Mischreibungszuständen neigen, in denen eine ausreichende Versorgung mit Schmierstoff zumindest teilweise behindert wird. Hieraus resultiert ein verstärkter Verschleiß. Diese Problematik tritt insbesondere in hydraulischen Drehübertragungen auf. Es besteht insgesamt Bedarf an einem Gleitlager, das starken mechanischen Beanspruchungen standhält und gleichzeitig eine zuverlässige Schmierung bereitstellt. Dabei soll das Gleitlager einfach und kosteneffizient herstellbar sein.

Die skizzierte Aufgabenstellung wird durch das erfindungsgemäße Gleitlager gelöst. Das Gleitlager umfasst einen mehrteiligen Lagerstuhl, in denen jeweils eine Lagerschale aufgenommen ist und zur Aufnahme einer Welle ausgebildet ist. Zwischen der Welle und der Lagerschale befindet sich im Betrieb ein Schmierstoff, der eine sogenannte hydrodynamische Lagerung der Welle in der Lagerschale erlaubt. Der Schmierstoff wird über eine Schmierstoffzufuhr von außerhalb des Lagerstuhls, die hydraulisch mit einer ersten Schmierstoffnut gekoppelt ist. Die erste Schmierstoffnut ist als Ausnehmung ausgebildet, die sich im Wesentlichen in Umlaufrichtung erstreckt. Von der ersten Schmierstoffnut zweigt eine Mehrzahl an zweiten Schmierstoffnuten ab, die dadurch hydraulisch mit der ersten Schmierstoffnut verbunden sind. Die zweiten Schmierstoffnuten erstrecken sich zumindest teilweise in eine, bezogen auf das Gleitlager, axiale Richtung. Infolgedessen wird Schmierstoff durch seinen Förderdruck an der Gleitfläche zwischen der Welle und der Lagerschale auch in Axialrichtung gefördert. Die zweiten Schmierstoffnuten sind als abgesetzte Nuten ausgebildet, die im Bereich der Lagerschale enden. Die abgesetzte Form verhindert einen verstärkten Austritt von Schmierstoff aus dem Gleitlager in Axialrichtung.

Die zweiten Schmierstoffnuten stellen eine vergrößerte Oberfläche bereit, über die Schmierstoff in den Schmierfilm einfließt. Die zumindest teilweise axiale Erstreckung der zweiten Schmierstoffnuten reduziert die vom Schmierstoff in Axialrichtung zurückzulegende Fließstrecke innerhalb des Schmierfilms. Bei einem konstanten Förderdruck ist so ein erhöhter Durchsatz an Schmierstoff möglich. Der Schmierstoff wird über die zweiten Schmierstoffnuten in einer Menge eingebracht, die eine erhebliche Wärmeaufnahme zwischen der Welle und der Lagerschale erlaubt. Über den Schmierfilm, der aus dem Schmierstoff gebildet wird, der aus den zweiten Schmierstoffnuten austritt, erfolgt eine Wärmeabfuhr zwischen der Welle und der Lagerschale.

Eine solche Wärmeabfuhr gewährleistet einen reduzierten Verschleiß im Drehübertrager, in dem das Gleitlager eingesetzt wird und bietet damit eine erhöhte Lebensdauer. Wenn durch eine mechanische Einwirkung die Welle gekippt wird und die Lagerschale berührt, entsteht ein sogenannter Mischreibungskontakt. Durch die zweiten Schmierstoffnuten wird der Mischreibungskontakt in axialer Richtung zuverlässig mit Schmierstoff versorgt und ein Trockenlaufen vermieden, das zu erhöhtem Verschleiß führt. Auch hierdurch wird die Lebensdauer eines hydraulischen Drehübertragers mit dem erfindungsgemäßen Gleitlager gesteigert.

In einer bevorzugten Ausführungsform der Erfindung weisen die zweiten Schmierstoffnuten eine Nutenbreite auf, die im Wesentlichen die gleiche Größendimension hat wie die Nutenbreite der ersten Schmierstoffnut. Die Nutenbreite der zweiten Schmierstoffnut entspricht dabei dem 0,08-fachen bis 1,5-fachen, bevorzugt dem 0,1-fachen bis 1,0-fachen, der Nutenbreite der ersten Schmierstoffnut. Die Nutenbreiten der ersten und zweiten Schmierstoffnuten sind weiter bevorzugt derart ausgebildet, dass in der ersten und den zweiten Schmierstoffnuten eine im Wesentlichen gleich hohe Fließgeschwindigkeit vorliegt. Der Durchsatz an Schmierstoff in den zweiten Schmierstoffnuten entspricht dabei der Summe des axial austretenden Schmierstoffs, des Schmierstoffs zum Füllen der zweiten Schmierstoffnuten und des Schmierspalts, und des auf die Welle übertragenen Schmierstoffs. Eine derartige Nutenbreite gewährleistet bei konstantem Förderdruck einen ausreichenden Durchsatz um ein zumindest teilweises Trockenlaufen des Mischreibungskontakts zu verhindern. Ferner wird durch einen derartig hohen Durchsatz eine besonders hohe Wärmeabfuhr erzielt. Insgesamt werden die Vorteile der erfindungsgemäßen Lösung durch entsprechend dimensionierte zweite Schmierstoffnuten weiter gesteigert.

Des Weiteren kann im erfindungsgemäßen Gleitlager die erste Schmierstoffnut einen höheren hydraulischen Querschnitt auf als jeweils die zweiten Schmierstoffnuten. Dies wird vorzugsweise dadurch erreicht, dass die erste Schmierstoffnut eine größere Tiefe aufweist als jeweils die zweiten Schmierstoffnuten. Ein entsprechend hoher hydraulischer Querschnitt der ersten Schmierstoffnut gewährleistet bei einem Förderdruck von bevorzugt 1 bar bis 6 bar eine ausreichende Versorgung mit Schmierstoff bei einer reduzierten Fließgeschwindigkeit. Infolge der reduzierten Fließgeschwindigkeit werden hydrodynamische Verluste reduziert, so dass eine zuverlässige effiziente Schmierstoffversorgung gewährleistet ist.

Vorzugsweise sind die zweiten Schmierstoffnuten im erfindungsgemäßen Gleitlager in eine Axialrichtung des Gleitlagers ausgerichtet. Eine axiale Ausrichtung der zweiten Schmierstoffnuten führt zu einer verkleinerte Nutfläche und einem verkürzten Nutenrand. Dadurch bieten die zweiten Schmierstoffnuten kurze Fließstrecken bei der gleichmäßigen Verteilung des Schmierstoffs an der Oberfläche der Lagerschale. Die kurzen Fließstrecken erfordern eine reduzierte Fließgeschwindigkeit des Schmierstoffs, und somit einen reduzierten Förderdruck des Schmierstoffs. Alternativ und/oder ergänzend können zweite Schmierstoffnuten schräg zur Axialrichtung ausgerichtet sein, so dass der axial fließende Schmierstoff eine zumindest teilweise Schraubenlinienbahn beschreibt. Schräg zur Axialrichtung ausgerichtete zweite Schmierstoffnuten weisen eine vergrößerte Nutfläche und einen verlängerten Nutenrand auf. Dies resultiert in verlängerten Fließstrecken für den Schmierstoff. Insgesamt wird dadurch eine vergrößerte Fläche bereitgestellt, an der der Schmierstoff austritt, was zu einer gleichmäßigeren Schmierstoffversorgung führt. Weiter bevorzugt ist mindestens eine der zweiten Schmierstoffnuten in Richtung der Drehrichtung der aufgenommenen Welle geneigt. Der in Drehrichtung gelegen Winkel zwischen der ersten und zweiten Schmierstoffnut beträgt dabei unter 90°.

Durch Wahl einer geeigneten Ausrichtung der zweiten Schmierstoffnuten sind so im erfindungsgemäßen Gleitlager der erforderliche Förderdruck und die Gleichmäßigkeit der Schmierstoffversorgung in einfacher Weise konstruktiv anpassbar. Eine Neigung mindestens einer zweiten Schmierstoffnut in Drehrichtung erlaubt es, die Umlenkung der Fließrichtung des Schmierstoffs zu verringern, was die eintretenden Druckverluste minimiert. Das erfindungsgemäße Gleitlager ist deshalb an eine Breite Spanne von Einsatzfällen anpassbar. Weiter alternativ können die zweiten Schmierstoffnuten auch eine Bogenform aufweisen.

In einer weiteren vorteilhaften Ausführungsform der Erfindung liegen zumindest zwei der zweiten Schmierstoffnuten im Bereich der ersten Schmierstoffnut in einem Winkelabstand von 10° bis 30°, vorzugsweise 20° bis 25°. Besonders bevorzugt zweigen die zweiten Schmierstoffnuten von der ersten Schmierstoffnut in einem gleichmäßigen Abstand in Umfangsrichtung ab, so dass die zweiten Schmierstoffnuten in einer Teilung von 10° bis 30°, bevorzugt 20° bis 25°, an der ersten Schmierstoffnut ausgebildet sind. Dies gewährleistet eine gleichmäßige Einbringung von Schmierstoff zwischen die Lagerschale und die Welle, die das erste bzw. zweite Bauteil eines hydraulischen Drehübertragers bilden, über die gesamte Umfangslänge. Ferner wird hierdurch in Umlaufrichtung der Abstand zwischen den zweiten Schmierstoffnuten reduziert. Bei einem Mischreibungskontakt, der sich über einen größeren Umfangswinkel erstreckt, z.B. 30°-50°, liegt in einem Schalenfeld zwischen den zweiten Schmierstoffnuten eine verkürzte Fließstrecke von der nächstgelegenen zweiten Schmierstoffnut zum Mischreibungskontakt vor. Hierdurch wird einem Trockenlaufen des Mischreibungskontakts vorgebeugt, was übermäßigen Verschleiß verhindert.

Alternativ kann der Winkelabstand zwischen den zweiten Schmierstoffnuten in einem ersten Umfangsbereich niedriger sein als in einem zweiten Umfangsbereich. Der erste Umfangsbereich ist dabei vorzugsweise ein Bereich, in dem aufgrund konstruktiver Randbedingungen, beispielsweise der Einbauorientierung und der Schwerkraft, eine erhöhte Neigung zu Mischreibungskontakten besteht. Die erfindungsgemäße Lösung ist damit für eine Vielzahl an Einsatzwecken in einfacher Weise optimierbar.

Darüber hinaus können die erste und/oder die zweiten Schmierstoffnuten durch ein spanabhebendes oder abtragendes Verfahren, insbesondere Drehen, Fräsen, Stoßen, Schleifen, Senkerodieren oder Drahterodieren, hergestellt sein. Diese Fertigungstechniken bieten ein hohes Maß an Präzision und sind kosteneffizient umsetzbar.

Bevorzugt ist die Lagerschale im erfindungsgemäßen Gleitlager aus einem Gleitlagerwerkstoff hergestellt, beispielsweise aus einer Blei-Zinn-Gusslegierung, einer Bronzelegierung, einer Kupfer-Zink-Legierung, einer Bismut-Legierung, einer Silberlegierung oder einer Aluminiumlegierung. Alternativ kann auch ein thermoplastischer Kunststoff wie beispielsweise Polyamid, Polyoxymethylen, Polyalkylenterephthalat, Polyethylen, Polytetrafluorethylen oder Polyimid eingesetzt werden. Diese Werkstoffe bieten ein hohes Maß an Verschleißbeständigkeit und sind einfach und wirtschaftlich bearbeitbar. Ferner sind derartige Werkstoffe gegen eine Breite Spanne an Schmierstoffen chemisch beständig.

Ferner kann das erfindungsgemäße Gleitlager eine Lagerbreite von 20 mm bis 600 mm, insbesondere von 50 mm bis 400 mm, aufweisen. Der Zapfendurchmesser kann 300 mm bis 900 mm betragen. Die zweiten Schmierstoffnuten weisen vorzugsweise eine Breite von 2 mm bis 15 mm, besonders bevorzugt von 5 mm bis 10 mm, auf. Die Tiefe der zweiten Schmierstoffnuten kann ferner 2 mm bis 8 mm betragen. Bei derartigen Dimensionen werden im Gleitlager und einem zugehörigen hydraulischen Drehübertrager Größenverhältnisse erzielt, bei denen eine besonders vorteilhafte Versorgung mit Schmierstoff erzielt wird, die übermäßigen Verschleiß bei Kontakt verhindern. Die erfindungsgemäße Lösung ist in derartigen Dimensionen besonders vorteilhalt auf Größen skalierbar, die für eine hydraulische Drehübertragung geeignet sind.

Im erfindungsgemäßen Gleitlager kann die erste Schmierstoffnut in einem mittigen Bereich der Lagerschale ausgebildet sein, so dass axial in beide Richtungen im Wesentlichen gleich lange Fließstrecken für den Schmierstoff ausgebildet sind. Hierdurch wird eine gleichmäßige Versorgung mit Schmierstoff sichergestellt. Alternativ oder ergänzend können mehrere erste Schmierstoffnuten, die in Umfangsrichtung verlaufen, in der Lagerschale ausgebildet sein. Die ersten Schmierstoffnuten können entlang der Axialrichtung in einem gleichmäßigen Abstand zueinander ausgebildet sein und von jeweils der gleichen zweiten Schmierstoffnut geschnitten werden. Mehrere der ersten Schmierstoffnuten können hydraulisch mit einer Schmierstoffzufuhr gekoppelt sein, so dass eine verstärkte Schmierstoffversorgung sichergestellt ist. Eine Mehrzahl an ersten Schmierstoffnuten erlaubt es, bei gleichbleibender Güte der Schmierstoffversorgung die zweiten Schmierstoffnuten mit einer reduzierten Nutenbreite auszubilden. Eine reduzierte Nutenbreite führt bei einem Mischreibungskontakt zu einer vergrößerten Kontaktfläche, so dass der dort auftretende Kontaktdruck verringert ist. Ein Gleitlager mit mehreren ersten Schmierstoffnuten verwirklicht die Vorteile der Erfindung in besonders hohem Maß.

Die zugrundeliegende Aufgabenstellung wird auch durch ein Planetengetriebe gelöst, das mit einer hydraulischen Drehübertragung verbunden ist. Die hydraulische Drehübertragung ist dazu ausgebildet, am Übergang von einem stehenden zu einem beweglichen Getriebeteil eine Schmierung bereitzustellen. Im erfindungsgemäßen Planetengetriebe ist die hydraulische Drehübertragung mit einem Gleitlager ausgestattet, das einer der zuvor skizzierten Ausführungsformen entspricht. Das erfindungsgemäße Planetengetriebe ist besonders zum Einsatz in Windkraftanlagen geeignet. Weitere bevorzugt Anwendungsgebiete sind Industriegetriebe und Schiffsgetriebe. Alternativ kann die hydraulische Drehübertragung auch bei einem Stirnradgetriebe eingesetzt werden. Darüber hinaus ist die erfindungsgemäße Lösung, also eine hydraulische Drehübertragung mit einer Ausführungsform des oben skizzierten Gleitlagers, auch für die Verwendung in einer Lamellenschaltkupplung geeignet.

Die Erfindung wird in den Figuren anhand einzelner Ausführungsformen beschrieben. Es zeigt im Einzelnen:
- FIG 1: eine Schrägansicht einer ersten Ausführungsform des erfindungsgemäßen Gleitlagers;
- FIG 2: einen Längsschnitt durch die erste Ausführungsform des erfindungsgemäßen Gleitlagers.

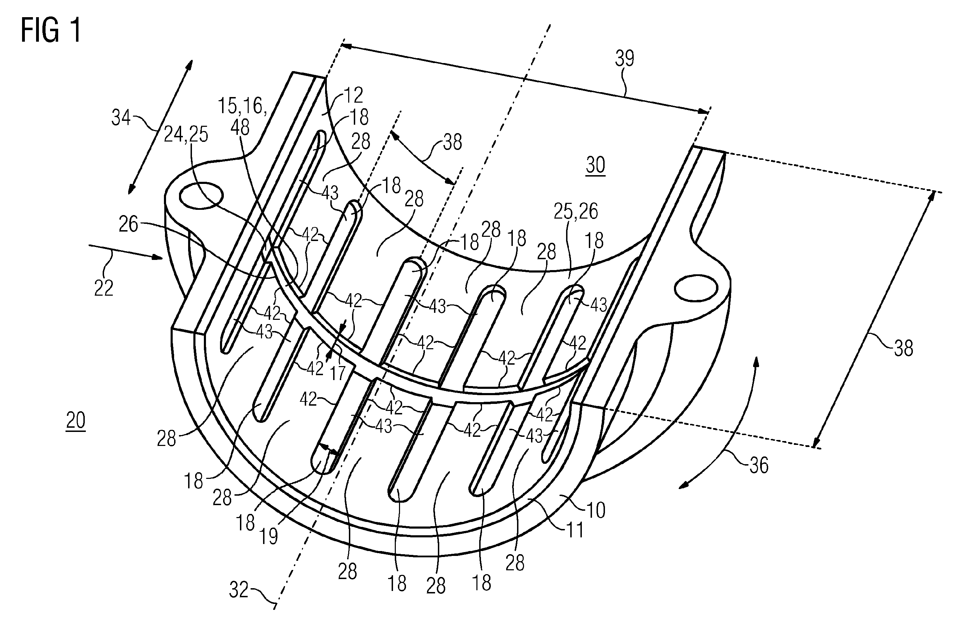

In FIG 1 ist eine Schrägansicht eines Gleitlagers 20, das einen Lagerstuhl 10 umfasst, in dem eine Lagerschale 11 aufgenommen ist, die aus einem Gleitlagerwerkstoff hergestellt ist. Die Lagerschale 11 weist eine Lagerbreite 38 von 20 mm bis 200 mm und einen Zapfendurchmesser 39 von 300 mm bis 900 mm auf. In der Lagerschale 11 ist eine nicht näher dargestellte Welle 30 um eine Drehachse 32 drehbar aufgenommen, die im Betrieb auf einem Schmierfilm 26 auf der Oberfläche 12 der Lagerschale 11 läuft. Der Schmierfilm 26 wird durch einen Schmierstoff 25 gebildet, der über eine Schmierstoffzufuhr 22 durch eine Schmierstofföffnung 24 in eine erste Schmierstoffnut 16 gefördert wird. Die Förderung des Schmierstoffs 25 erfolgt dabei mit einem Förderdruck von 1 bar bis 6 bar. Die erste Schmierstoffnut 16 verläuft im Wesentlichen entlang einer Umlaufrichtung 36. Die erste Schmierstoffnut 16 weist über ihre Breite 17 und Tiefe 48 einen hydraulischen Querschnitt 15 auf, der bei einer reduzierten Fließgeschwindigkeit des Schmierstoffs 25 eine ausreichende Schmierstoffversorgung für den Schmierfilm 26 gewährleistet. Die erste Schmierstoffnut 16 ist im Wesentlichen kanalartige ausgebildet und weist eine konstante Breite 17 auf. In eine Axialrichtung 34 zweigen beidseitig zweite Schmierstoffnuten 18 von der ersten Schmierstoffnut 16 ab. Durch die zweiten Schmierstoffnuten 18 fließt Schmierstoff 25 axial nach außen um gewährleistet eine nahezu flächige Versorgung mit Schmierstoff 25. Die zweiten Schmierstoffnuten 18 sind abgesetzt ausgebildet, sind also axial nach außen abgeschlossen. Hierdurch werden die Schmierstoffverluste in Axialrichtung 34 minimiert. Des Weiteren sind die Schmierstoffnuten 18 bezogen auf die Drehachse 32 zueinander in einem Winkelabstand 38 von 10° bis 30° angeordnet. Durch die Breite 19 der zweiten Schmierstoffnuten 19 ergeben sich Schmierfelder 28 zwischen den zweiten Schmierstoffnuten 16, in denen ein Schmierfilm 26 von im Wesentlichen konstanter Dicke vorliegt. In den Schmierfeldern 28 liegt ein reduzierter Abstand zur nächstgelegenen zweiten Schmierstoffnut 18 vor. Bei einem Mischreibungskontakt in einem der Schmierfelder 28 wird durch die daraus resultierende verkürzte Fließstrecke eine zuverlässige Schmierstoffversorgung gewährleistet. Jede der zweiten Schmierstoffnuten 18 weist eine Umrandung 42 auf, die eine Nutfläche 43 teilweise umschließt. Die Umrandung 42 bildet damit hydrodynamisch eine Spaltbreite aus, an der beim Drehen der Welle 30 eine laminare Strömung ausgebildet ist. Die Umrandung 42 erhöht damit unabhängig vom Druck im Schmierfilm und vom Förderdruck der Schmierstoffzufuhr 22 den erzielbaren Durchsatz an Schmierstoff.

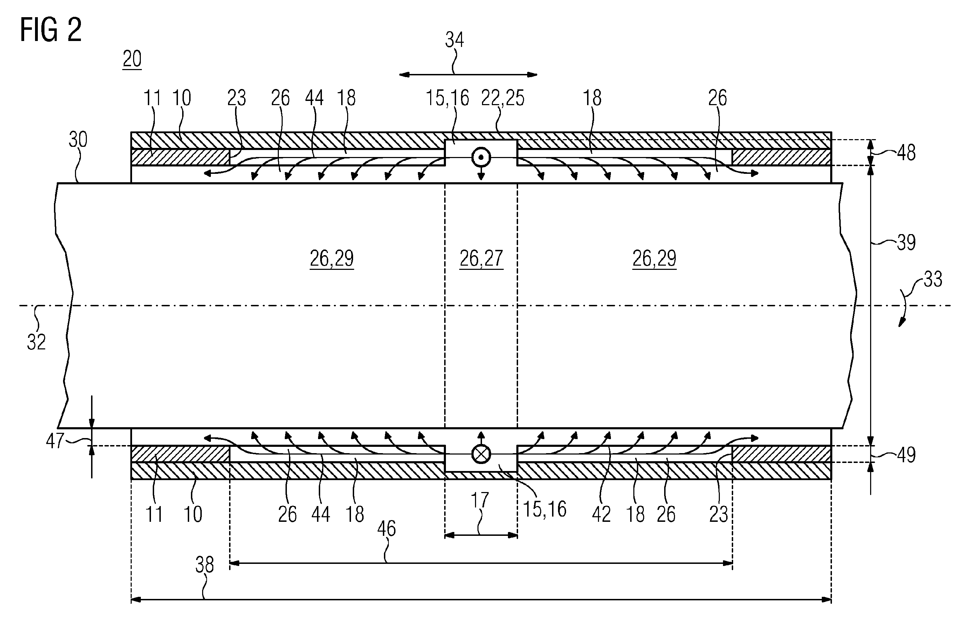

FIG 2 zeigt schematisch in einem Längsschnitt die erste Ausführungsform des erfindungsgemäßen Gleitlagers 20, das in FIG 1 in einer Schrägansicht dargestellt ist. Im Lagerstuhl 10 ist die Lagerschale 11 aufgenommen, zwischen der und der Welle 30 ein Schmierfilm 26 ausgebildet ist. Die Welle 30 ist drehbar um eine Drehachse 32 gelagert. Entlang der nicht näher dargestellten Umfangsrichtung 36 umschließt der Schmierfilm 26 die Welle 30 im Bereich des Gleitlagers 20. Der Schmierstoff 25 erreicht eine erste Schmierstoffnut 16 über eine Schmierstoffzufuhr 22 und fließt einer Drehrichtung 33 der Welle 30 folgenden in Umfangrichtung 36 durch die erste Schmierstoffnu6 18. Die erste Schmierstoffnut 16 weist einen hydraulischen Querschnitt 15 auf, der durch deren Nutenbreite 17 und deren Tiefe 48 bestimmt ist. Die Tiefe 48 der ersten Schmierstoffnut 16 über steigt dabei die Tiefe 49 von zweiten Schmierstoffnuten 18, die von der ersten Schmierstoffnut 16 abzweigen. Durch die so bereitgestellte hydraulische Kopplung wird ein Schmierstofffluss 44 in Axialrichtung 34 hervorgerufen. Die zweiten Schmierstoffnuten 18 sind abgesetzt ausgebildet und weisen ein Nutenende 23 auf, das einen geradlinigen Durchfluss des Schmierstoffs 25 in Axialrichtung 34 verhindert. Der Schmierstofffluss 44 tritt entlang einer Umrandung 42 der zweiten Schmierstoffnuten 18 in den Schmierfilm 26 ein. Dabei tritt in Axialrichtung 34 ein reduzierter Schmierstofffluss 44 über die Nutenenden 23 hinaus auf, der jeweils durch einzelnen Pfeil abgebildet ist. Der Schmierfilm 26 weist eine Schmierfilmdicke 47 auf, die im Wesentlichen 1,0 ‰ bis 1,5 ‰ eines Zapfendurchmessers 39 des Gleitlagers 20 beträgt.

Die axialen Abmessungen der zweiten Schmierstoffnuten 18 definieren eine Versorgungsbreite 46, über die hinweg Schmierstoff 25 unmittelbar radial auf die Welle 30 tritt. Die Benetzungsbreite 46 ist durch die Nutenenden 23 der zweiten Schmierstoffnuten 18 begrenzt und so ausgelegt, dass das am Nutenende 23 verbleibende Material der Lagerschale 11 gegenüber dem Förderdruck des Schmierstoffs 25 noch hinreichende mechanische Stabilität bietet. Die Benetzungsbreite 46 beträgt zwischen 80% bis 90% der Lagerbreite 38.

Schmierstoff 25, der im Bereich der ersten Schmierstoffnut 16 in den Schmierfilm 26 eintritt, bildet auf der Welle 30 ein mittiges Schmierfilmsegment 27 aus. Schmierstoff 25, der im Bereich der zweiten Schmierstoffnuten 18 in den Schmierfilm 26 eintritt, bildet äußere Schmierfilmsegmente 29 aus, die die Benetzungsbreite 46 und die zweiten Schmierstoffnuten 18 axial überragen. Durch eine Einstellung des Förderdrucks des Schmierstoffs 25 ist konstruktiv die Versorgungsbreite 46 einstellbar.

## Patentansprüche

1. Gleitlager (20), umfassend mindestens eine Lagerschale (11) zur Aufnahme einer Welle (30) und einer in Umfangsrichtung (36) verlaufenden ersten Schmierstoffnut (16), die hydraulisch mit einer Schmierstoffzufuhr (22) verbunden ist, wobei von der ersten Schmierstoffnut (16) eine Mehrzahl an zumindest teilweise axial ausgerichteten abgesetzten zweiten Schmierstoffnuten (18) abgezweigt ist, **dadurch gekennzeichnet, dass** die abgesetzten zweiten Schmierstoffnuten (18) zur Bereitstellung eines Schmierfilms (26) zu einer Wärmeabfuhr ausgebildet ist.

2. Gleitlager (20) nach Anspruch 1, **dadurch gekennzeichnet, dass** die zweiten Schmierstoffnuten (18) jeweils eine Nutenbreite (19) aufweisen, die der 0,08-fachen bis 1,5-fachen, bevorzugt dem 0,1-fach bis 1,0-fachen, einer Nutenbreite (17) der ersten Schmierstoffnut (16) entspricht.

3. Gleitlager (20) nach Anspruch 1 oder 2, **dadurch gekennzeichnet, dass** die erste Schmierstoffnut (16) einen höheren hydraulischen Querschnitt (15) aufweist als jeweils die zweiten Schmierstoffnuten (18).

4. Gleitlager (20) nach einem der Ansprüche 1 bis 3, **dadurch gekennzeichnet, dass** die zweiten Schmierstoffnuten (18) in Axialrichtung (34) oder schräg zur Axialrichtung (34) ausgerichtet sind.

5. Gleitlager (20) nach einem der Ansprüche 1 bis 4, **dadurch gekennzeichnet, dass** zwischen zumindest zwei der zweiten Schmierstoffnuten (18) im Bereich der ersten Schmierstoffnut (16) ein Winkelabstand (38) von 10° bis 30°, bevorzugt 20° bis 25°, liegt.

6. Gleitlager (20) nach einem der Ansprüche 1 bis 5, **dadurch gekennzeichnet, dass** die erste und/oder zweite Schmierstoffnut (16, 18) durch ein spanabhebenden oder abtragendes Verfahren, insbesondere Drehen, Fräsen, Stoßen, Schleifen, Senkerodieren oder Drahterodieren, hergestellt ist.

7. Gleitlager (20) nach einem der Ansprüche 1 bis 6, **dadurch gekennzeichnet, dass** die Lagerschale (11) aus einem Gleitlagerwerkstoff, insbesondere einer Blei-Zinn-Gusslegierung, einer Bronzelegierung, einer Kupfer-Zink-Legierung, einer Bismut-Legierung, einer Silberlegierung, einer Aluminiumlegierung, oder einem thermoplastischen Kunststoff hergestellt ist.

8. Gleitlager (20) nach einem der Ansprüche 1 bis 7, **dadurch gekennzeichnet, dass** das Gleitlager (20) eine Lagerbreite (38) von 20 mm bis 600 mm, insbesondere 50 mm bis 400 mm, aufweist und/oder einen Zapfendurchmesser (39) von 300 mm bis 900 mm aufweist.

9. Gleitlager (20) nach einem der Ansprüche 1 bis 8, **dadurch gekennzeichnet, dass** die erste Schmierstoffnut (16) in Axialrichtung (34) in einem mittigen Bereich der Lagerschale (11) angeordnet ist, oder mehrere in Umfangsrichtung (36) verlaufende erste Schmierstoffnuten (16) entlang der Axialrichtung (34) in gleichmäßigem Abstand angeordnet sind.

10. Planetengetriebe, umfassend eine hydraulische Drehübertragung, die ein Gleitlager (20) nach einem der Patentansprüche 1 bis 9 aufweist.
